# EUROPEAN PATENT SPECIFICATION

(11) **EP 1 344 671 B1**
(45) Date of publication and mention of the grant of the patent: **25.04.2007**
(21) Application number: 03004745.0
(22) Date of filing: 04.03.2003
(51) Int. Cl.: B60J 5/04, B60R 13/08

(54) **Car door structure and noise insulation sheet**
Autotürstruktur und Geräuschdämpfungsmatte
Structure de porte de véhicule et couche d'isolation acoustique

(30) Priority: 04.03.2002 JP 2002057777; 18.11.2002 JP 2002334292
(43) Date of publication of application: 17.09.2003
(73) Proprietor: Nishikawa Rubber Co., Ltd., Hiroshima-shi, Hiroshima-ken (JP)
(72) Inventor: Kohara, Yoshihiro, Nishi-ku, Hiroshima-shi, Hiroshima-ken (JP); Arata, Mitsuaki, Nishi-ku, Hiroshima-shi, Hiroshima-ken (JP); Isobe, Masami, Nishi-ku, Hiroshima-shi, Hiroshima-ken (JP); Baba, Eiichi, Nishi-ku, Hiroshima-shi, Hiroshima-ken (JP); Kobayashi, Tatsuo, Nishi-ku, Hiroshima-shi, Hiroshima-ken (JP); Nawate, Kouji, Nishi-ku, Hiroshima-shi, Hiroshima-ken (JP); Miyahira, Hiroaki, Nishi-ku, Hiroshima-shi, Hiroshima-ken (JP); Emori, Shinichiro, Nishi-ku, Hiroshima-shi, Hiroshima-ken (JP)
(74) Representative: Goddar, Heinz J.

(56) References cited:
- EP-A- 0 694 426
- DE-A- 4 337 468
- DE-A- 19 632 550
- US-A- 5 595 415
- US-A1- 2001 030 444
- US-B1- 6 183 038
- PATENT ABSTRACTS OF JAPAN vol. 1999, no. 01, 29 January 1999 (1999-01-29) & JP 10 278586 A (KANTO AUTO WORKS LTD), 20 October 1998 (1998-10-20)

## Description

### BACKGROUND OF THE INVENTION

### Field of the invention:

This invention relates to a car door structure comprising a door inner panel and a door trim, and a noise insulation sheet applied to the car door structure.

### Description of the related arts:

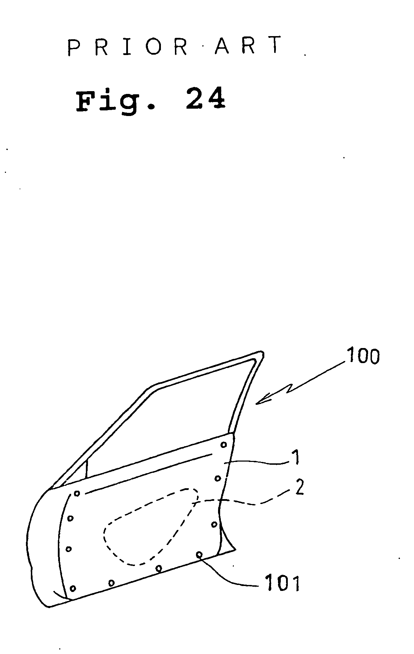

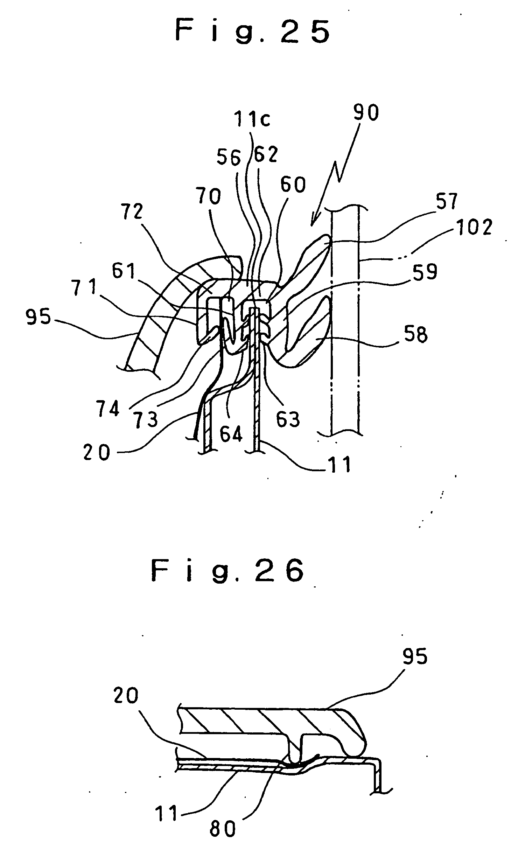

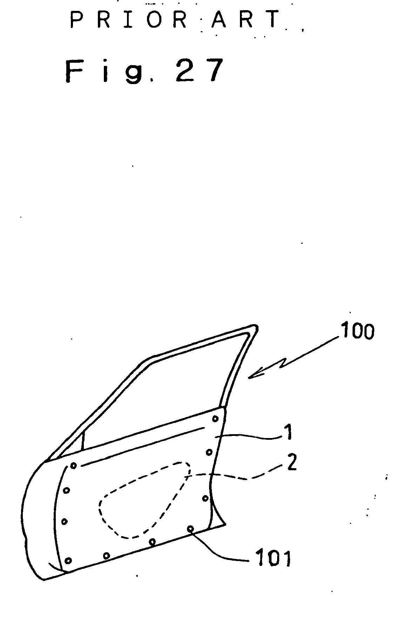

Conventionally, as shown in Fig. 24, an interior door trim, which is installed to the interior side of the door inner panel, is provided with felt 2 or urethane at the back side thereof, or the door inner panel is provided with an urethane foam in order to provide an efficient noise insulation effect to the inside of a car door 100.

For example, Japanese utility model publication No. 5-23376 discloses a door trim provided with a pad material consisting of an urethane foam and the like. Further, Japanese unexamined patent publication No. 10-119159 discloses a noise insulation cover made of an urethane foam.

### [Problems to be solved by the invention]

However, the noise insulation effects in the prior arts were deficient since the felt 2, urethane, pad material, and a noise insulation cover were all prepared separate from the door inner panel or the door trim, and they were installed merely in a smaller part of the door trim 1 or the interior side of a door inner panel.

Further, there was a difficulty in an installation operation because they had to be installed in a certain area of the door inner panel or the door trim.

EP-A-0 694 426 relates to a water deflector sheet construction having sound absorbing qualities. The water deflector is mounted on inner door trim panels so as to protect the inner door trim panels as well as components mounted thereon from being damaged by water entering the interior of the doors.

JP-10 278586 A discloses an installing structure of sub-seal with door trim. In said installing structure, a trim terminal being the end of a flat board provided to a part of a door trim is projected along a door inner panel. To this projecting trim terminal, a solid rubber with a U-shape of section is inserted. A sponge rubber is formed by projecting to the external direction along the upper edge of one piece of the solid rubber, so as to compose a sub-seal part. Said sponge rubber is abutted to a scarf plate which is fixed by covering the surface of a locker panel, so as to form a sound insulation structure.

An object of the present invention, therefore, is to provide a car door structure which has an efficient noise insulation effect and is easy to install.

### SUMMARY OF THE INVENTION

This object is achieved by a car door structure according to claim 1.

The dependent claims relate to preferred embodiments.

According to the invention, a new room is provided between the door inner panel and the door trim as the noise insulation sheet is hung down between the door inner panel and the door trim like a curtain. With this newly provided room, the noise insulation effect improves compared to the conventional arts which are provided with felt, urethane, pad material, the noise insulation cover, and the like.

Further, the noise insulation sheet can be easily installed since it is merely hung down from the upper side to the lower side like a curtain. That is, the noise insulation sheet can be installed merely by fixing any portion thereof to the door inner panel or the door trim as described in a further aspect of the invention. Particularly, the noise insulation sheet can be installed by fixing the upper end thereof to either the door inner panel or the door trim as described in a further aspect of the invention, or by fixing the left and right sides thereof to the door inner panel or the door trim as described in the third aspect of the invention, or further by fixing the upper portion thereof to the inner weather strip which is secured to the door inner panel or the door trim as described in the sixth aspect of the invention.

Further, according to the invention, the noise insulation sheet covers at least the upper part of the door inner panel, so that a leakage of the noise through the upper portion of the door inner panel can be mitigated.

Furthermore, only the upper portion of the noise insulation sheet should be fixed to the inner weather strip as a further aspect of the invention, or to the door trim or the door inner panel as a further aspect of the invention for an installation of the entire noise insulation sheet. Therefore, it is easy to install. Particularly, according to the further aspect of the invention, an installation operation is completed by merely attaching the inner weather strip, which is provided with the noise insulation sheet in advance, to the door trim, so that an installation operation can be done easily.

Although, it is preferable that the noise insulation sheet should be provided a length similar to the height (width in a vertical direction) of the door inner panel in order to obtain a sufficient noise isolation effect, the length of the noise insulation sheet may be 1/2 or 1/3 (or even 2/3) of the height of the door inner panel. Therefore, as a further aspect of the invention for example, the noise insulation sheet may be provided at the upper half or lower half of the door inner panel. Further, as a further aspect of the invention, the noise insulation sheet may be provided in the mid portion of the door inner panel when the panel is divided into three sections in a vertical direction or a horizontal direction.

By arranging so, the material cost of the noise insulation sheet can be lowered, and an installation operation becomes easier as the noise insulation sheet becomes smaller in size.

According to a further aspect of the invention, the noise insulation sheet can be firmly fixed since the upper end of thereof is fixed between the leg parts of the door trim, which supports some portions of the inner weather strip from underneath, and a part of the inner weather strip.

According to a further aspect of the invention, the noise insulation sheet can be saved in quantity for an amount that the sheet is unprovided at the leg parts as the upper edge thereof is lowered. Further, an adhesion nature of the support part against the leg parts increases because the noise insulation sheet is unprovided between the leg parts and the support part of the inner weather strip.

According to a further aspect of the invention, the noise insulation sheet does not protrude out of the edge of the door trim, and the noise insulation effect does not decrease nor the outlook of the door decreases since the noise insulation sheet is hung down between the door inner panel and the door trim like a curtain, while the both sides or the lower part of the noise insulation sheet is adequately positioned by the pins or clips.

Particularly, according to further aspects of the invention, the edge portion of the noise insulation sheet is sufficiently prevented from protruding out to the door trim because the clips are provided at both sides or the lower portion of the noise insulation sheet.

According to further aspects of the invention, an outlook of the car door structure does not decrease since the edge part of the noise insulation sheet, which is hung down like a curtain between the door inner panel and the door trim, is pushed into the groove having a concave shape in section and is fixed not to protrude out of the edge of the door trim.

Further, a decline of the noise isolation effect can be prevented which would come out if the noise insulation sheet protrudes from the edge of the door trim.

According to further aspects of the invention, the noise insulation effect improves since two rooms are created between the door inner panel and the door trim by an installation of the noise insulation sheet between the door inner panel and the door trim. Further, it is unnecessary to transport the door trim with the door inner weather strip secured to the door trim to an installation field because the door inner weather strip is secured to the door inner panel and it is not secured to the door trim.

That is, the inner weather strip alone or the inner weather strip wich the noise insulation sheet secured to the inner weather strip can be transported to the installation field separated from the door trim or the door inner panel, so that those parts can be transported to the installation field in a smaller size, and that a transportation operation becomes easier.

Furthermore, a removing operation of the harness becomes easier during an installation operation since operators are able to reach their hands to the harness of the door from any side area of the door. And, the installation operation can be pursued efficiently because the door installation operation can be completed by checking the harness with operators' eyes.

Further, the installation operation can be performed easily since the noise insulation sheet can be fixed merely by inserting the upper end of the sheet to the inner weather strip. And, the noise insulation sheet can be firmly fixed to the inner weather strip because a plurality of projection pieces of the attachment mechanism tightly stick to and hold the upper end of the noise insulation sheet both from the outer and interior sides of the car when the installation operation is completed.

Furthermore, the noise insulation sheet is prevented from shifting its position and an outlook of the door structure can be properly maintained since the door trim is provided with pressing pieces at the door inner panel side, which press the noise insulation sheet to the door inner panel when the sheet is installed.

According to a further aspect of the invention, fewer noise invades or leaks through a gap formed at the lower part of the door between the lower part of the door trim and the door inner panel, and the noise isolation effect further increases because the lower p art of the noise insulation sheet, which is hung down like a curtain between the door inner panel and the door trim, protrudes from the bottom edge of the door trim, and the protruded part of the sheet is fixed to the interior side of the door inner panel.

Further, much less time is required in an installation operation, and a better outlook of the door structure can be obtained since the protruded part of the noise insulation sheet, extending from the lower end of the noise insulation sheet, is applied to the lower part of the door structure, instead of applying an individual part which is prepared separate from the noise insulation sheet.

### BRIEF DESCRIPTION OF THE DRAWINGS

Fig. 1 is a perspective view showing a car door structure according to a first aspect of the invention;
Fig. 2 is an enlarged sectional view along line A-A in Fig. 1;
Fig. 3 is an enlarged sectional view along line A-A in Fig. 1 showing another embodiment of a first aspect of the invention;
Fig. 4 is an enlarged sectional view along line A-A in Fig. 1 showing another embodiment of a first aspect of the invention;
Fig. 5 is an enlarged sectional view along line A-A in Fig. 1 showing another embodiment of a first aspect of the invention;
Fig. 6 is a perspective view showing another embodiment of a first aspect of the invention;
Fig. 7 is a perspective view showing another embodiment of a first aspect of the invention;
Fig. 8 is a perspective view showing a primary part of a second aspect of the invention;
Fig. 9 is a perspective view of an outlook of a car door structure where the structure shown in Fig. 8 is installed;
Fig. 10 is a perspective view showing a primary part of a car door structure according to a third aspect of the invention;
Fig. 11 is an elevation view showing an attached noise insulation sheet;
Fig. 12 is a decomposed perspective view showing a car door structure according to a fourth aspect of the invention;
Fig. 13 is a sectional view showing a primary part of a car door structure according to a fourth aspect of the invention;
Fig. 14 is a decomposition perspective diagram showing the door structure for cars related to the fifth operation form of this invention;
Fig. 15 is a sectional view showing a primary part of a car door structure according to a fifth aspect of the invention;
Fig. 16 is a perspective view showing an attachment part of a clip shown in Fig. 15;
Fig. 17 is a perspective view showing an outlook of a car door structure according to a sixth aspect of the invention;
Fig. 18 is an enlarged sectional view along line F-F in Fig. 17 showing a primary part of a car door structure according to a sixth aspect of the invention;
Fig. 19 is a sectional view showing a condition where a noise insulation sheet is pushed into a channel shown in Fig. 18;
Fig. 20 is a sectional view showing a primary part of another door structure for cars according to a sixth aspect of the invention;
Fig. 21 is a sectional view showing a primary part of another door structure for cars according to a sixth aspect of the invention;
Fig. 22 is a decomposed perspective view showing a door which a noise insulation sheet according to a seventh aspect of the invention is attached;
Fig. 23 is an enlarged side view showing a primary part of a noise insulation sheet according to a seventh aspect of the invention; and
Fig. 24 is a perspective view showing a car door structure according to a prior art.

### DESCRIPTION OF PREFERRED EMBODIMENTS

### (First embodiment of the invention)

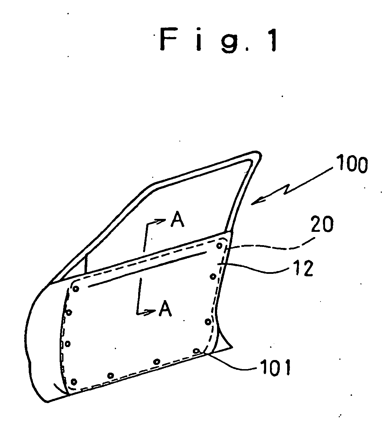

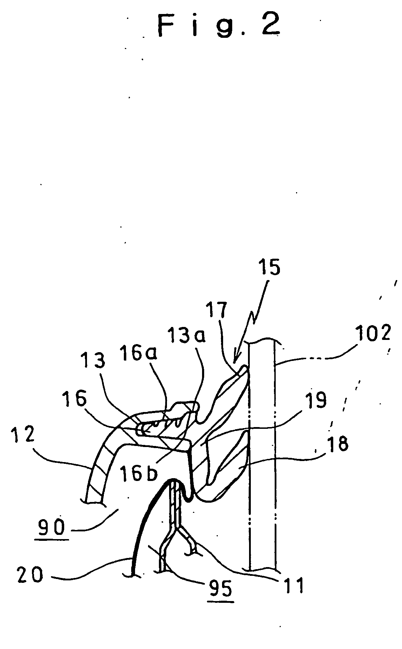

Referring to Fig. 1 and 2, a car door structure according to a first embodiment of the invention will be described.
Fig. 1 is a perspective view showing a car door structure according to the first embodiment of the invention. Fig. 2 is an enlarged sectional view along line A-A line Fig. 1.

This car door structure comprises a door inner panel 11 which forms a part of a door 100 and is situated inside the belt-line of a car. An interior door trim 12 is installed above and the interior side of the door inner panel 11. A inner weather strip 15 is installed in the upper portion of the door trim 12, which makes a resilient contact with a door glass 102.

The inner weather strip 15 is composed of an attachment base 16, a pair of seal lip parts 17, 18 and a support part 19. The seal lip 17 is positioned above the seal lip 18, and both lips 17, 18 make resilient contacts with a door glass 102 from the interior side of the car. The door glass 102 slides in an upward and downward directions. The support part 19 extends from the attachment base 16 in the downward direction while supporting the seal lips 17, 18. The support part 19 is uniformed with the attachment base 16 and it forms a rectangular shape in section with a combination of the attachment base 16. The attachment base 16 is provided with a plurality of lip parts 16a and a positioning projection 16b at the upper surface thereof (they may be provided at the lower surface thereof). In this embodiment, the inner weather strip 15 is unprovided with an insert, but it may be provided with the insert. Further, in this embodiment, a pair of seal lip parts 17, 18 are formed at an upper side and a lower side of the inner weather strip 15, but only a single seal lip may be provided and a number of the seal lips are unlimited.

At the upper part of the door trim 12, there is provided a channel part 13 where the attachment base 16 of the inner weather strip 15 is tightly inserted. Further, a step 13a is formed at the opening tip part of the recess 13 toward the outside of the width direction. When the inner weather strip 15 is connected to the door trim 12, the positioning projection 16b of the inner weather strip 15 contacts and engages with the step 13a.

In between the door inner panel 11 and the door trim 12, a noise insulation sheet 20 is hung down from the upper side to the lower side like a curtain, and the upper end of the noise insulation sheet 20 is fixed to the support part 19 of the inner weather strip 15. The noise insulation sheet 20 covers at least the upper end of the door inner panel 11 in order to prevent that a noise leaks from the upper part.

As shown in Fig. 2, by providing the noise insulation sheet 20 between the door inner panel 11 and the door trim 12, two space rooms 90, 95 can be created out of a single room, so that the noise insulation effect of the car door structure improves.

It has become clear as a result of a experimental test that the the car door structure according to the embodiment of the present invention can insulate noise more than 2 dB in the range of 100 to 10,000 Hz compared to the prior art which uses felt, urethane, pad material or a noise insulation cover.

Although the quality of the material of the noise insulation sheet 20 is not strictly limited, it is desirable to employ a cloth having a high sound absorption nature. Among commercial products, for example, Sumitomo 3M Corporation's "THINSULATE"(trademark) may be employed as a material of the noise insulation sheet. In addition, as far as it is sheet-like, a sheet made of such as rubber or nylon can be employed as the noise insulation sheet.

As described above, since the noise insulation sheet 20 can be installed by merely hanging down from an upper side to a lower side like a curtain, it is easy to install the noise insulation sheet. Especially, when such a noise insulation sheet 20 is used which is attached in advance to the support part 19 of the inner weather strip 15, an installation operation can be easily completed by merely inserting the inner weather strip 15 into the channel part 13 of the door trim 12.

The noise insulation sheet 20 may be left hung down, or it may be fixed with clips 101 which are used for securing the door trim 12 to the door inner panel. Further, it is possible to fix the noise insulation sheet 20 to the door inner panel or the door trim using a double-sided adhesive tape, adhesives, a stapler or the like.

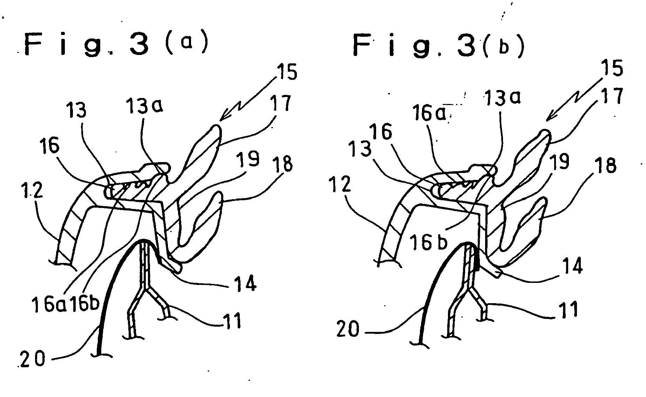

Although, In this embodiment, the noise insulation sheet 20 is fixed to the support part 19 of the weather strip 15, it can be fixed to other parts of the weather strip 15 as well. Further, as shown in Fig. 3 (a), the upper portion of the noise insulation sheet 20 can be attached to the door trim 12 side, in this case, the leg part 14 of the door trim 12 (it is not limited to the leg part 14, and it can be fixed to the opposite side of the leg part 14 beyond the door inner panel 11 as well (which is the area shown in the left hand side in Fig. 3)). Further, as shown in Fig. 3 (b), the upper end of the noise insulation sheet 20 can be attached to the door inner panel 11 side (it is not restricted to the part which covers the upper part of the door inner panel 11).

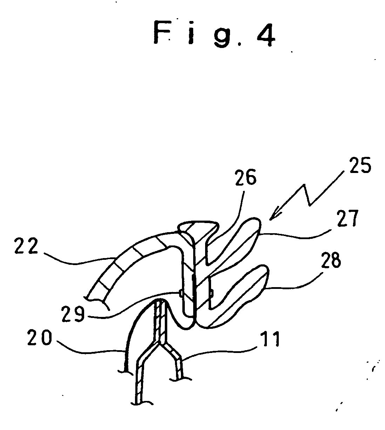

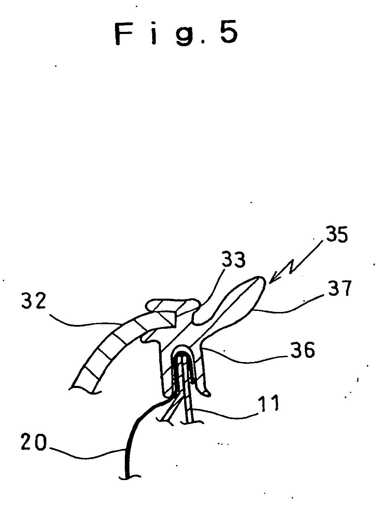

Further, although this embodiment demonstrates the door structure that the attachment base 16 of the inner weather strip 15 is inserted into the channel part 13 of the door trim 12, which is formed at the upper part thereof, the inner weather strip 15 may be installed to any portion other than the channel part 13. For example, as shown in Fig. 4, the attachment base 26 of the inner weather strip 25 can be fixed to the door trim 22 whose tip is bent, by means of a tap 29 such as a nail. Or, as shown in Fig. 5, the tip of the door trim 32 may be inserted into a channel part 33 formed in the inner weather strip 35. Furthermore, the door trim 12 or 32 and the inner weather strip 15 or 35 can be fixed by welding the whole or part of the channel part 33 of the inner weather strip 35 or the attachment base 16 of the inner weather strip 15, shown in Fig. 2, to the corresponding part of the door trim 12 or 32. Moreover, although it is not illustrated, such an inner weather strip may be used, which is fixed to the door inner panel 11 in advance.

Furthermore, it is effective to make a slit in the noise insulation sheet 20 in order to easily install or remove a harness such as a door handle, power windows and a lock to a door panel at the time of an installation operation.

It is effective to make a length of the noise insulation sheet 20 substantially equivalent to the height (longitudinal width) of the door inner panel 11 in order to install the noise insulation sheet 20 to the entire portion of the door inner panel 11. However, even if the length of the sheet 20 is about 1/2 or 1/3 (or as well as 2/3) of the height of the door inner panel 11, the noise insulation effect can be efficiently acquired.

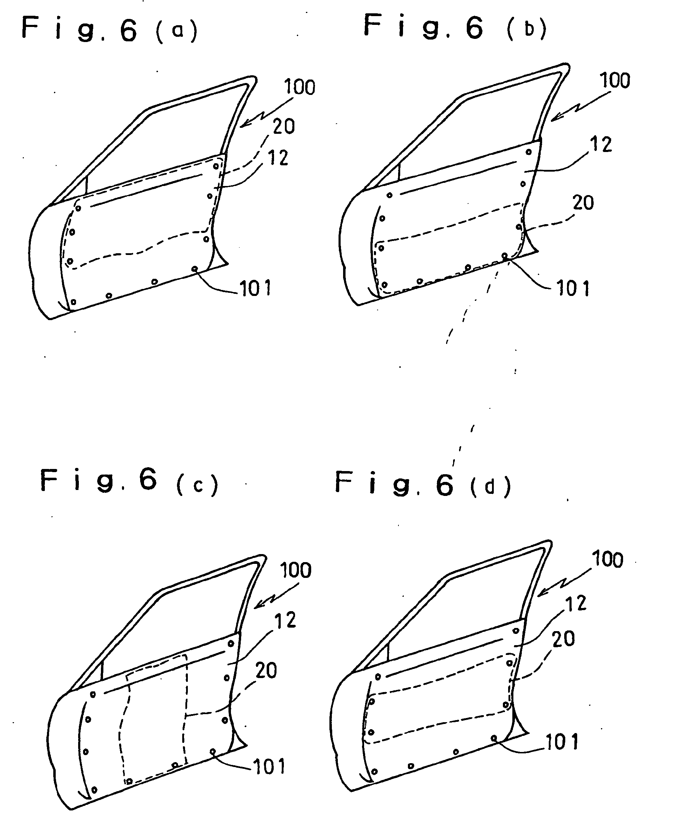

Therefore, for example as shown in Fig. 6 (a), (b), the noise insulation sheet 20 can be installed in about an upper half or a lower half of the door inner panel 11. Or, as shown in Fig. 6 (c), (d), the noise insulation sheet 20 can be installed in the central part of the door inner panel 11, dividing equally the door inner panel 11 into three sections in a longitudinal direction or a horizontal direction.

By arranging so, the noise insulation sheet 20 can be saved in its material cost, and it is easily installed as it becomes smaller in size.

Moreover, according to this embodiment, although it is not illustrated, the noise insulation effect will further improves as the noise insulation sheet 20, which is hung down like a curtain, is fixed at the left and right sides or the lower side thereof by means of such as clips, adhesives, and a double-sided adhesive tape.

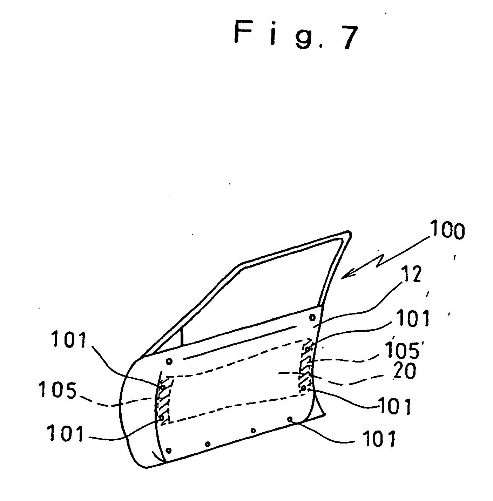

Further, although in this embodiment, the noise insulation sheet 20 is fixed to the door inner panel 11 or the door trim 12 at the upper part thereof, the sheet 20 can be fixed to the door inner panel 11 or the door trim 12 at other than upper part. A fixing portion is not limited to the upper part of the sheet 20. For example, as shown in Fig. 7, the noise insulation sheet 20 while being hung down like a curtain can be fixed at its right and left side ends 105, 105 which corresponds to the right and left sides of a door 100, with fixing means such as clips, adhesives, and a double-sided adhesive tape. The fixing operation may be performed with either clips, adhesives, or the double-sided adhesive tape, or it may be performed with a combination thereof.

The noise insulation sheet 20 according to this embodiment has an additional effect in preventing noise generated as the door trim 12, 22 or 32 and the door inner panel 11 contact with each other.

### (Second embodiment of the invention)

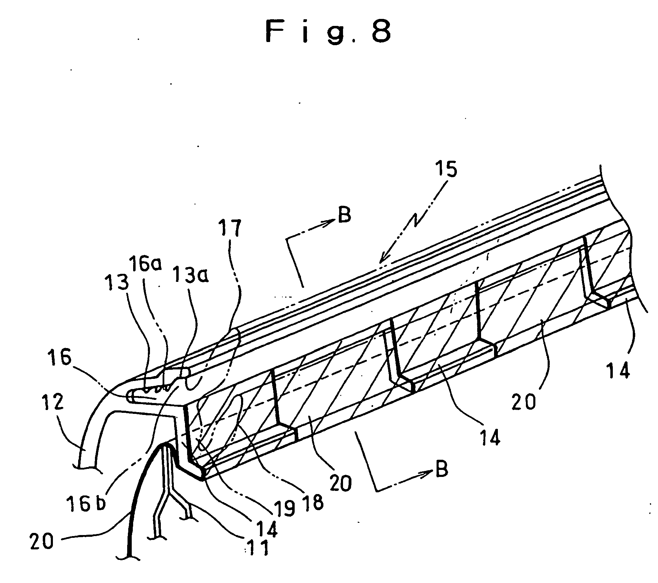

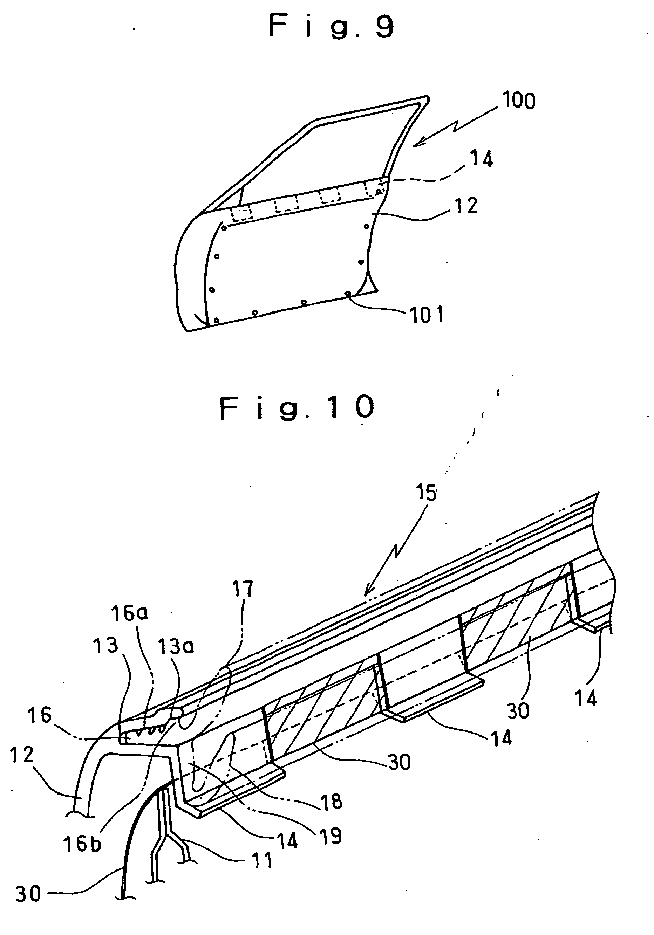

Referring to Fig. 8 and 9, the second embodiment of a car door structure according to the present invention will be described. Identical numerals are given to the identical parts described in the first embodiment, and explanation thereof will be excluded.

Fig. 8 is a perspective view showing a principal part of a car door structure according to the second embodiment of the present invention. Fig. 9 is a perspective view showing an out look of a car door structure in which the structure shown in Fig. 8 is installed.

In Fig. 8, the weather strip 15 is illustrated with a phantom line, and the area the noise insulation sheet 20 is located is illustrated with the slash for convenience.

A sectional view along line B-B in Fig. 8 is equivalent to the drawing shown in Fig. 2.

A car door structure according to the second embodiment of the present invention comprises, similar to the first embodiment, a door inner panel 11 and a door trim 12 which is installed over the upper portion and the interior side of the door inner panel. The inner panel 11 forms a part of a car door structure and is positioned inside the belt line of the car. The door trim 12 is provided with an inner weather strip 15 at the upper, part thereof, which makes a resilient contact with a door glass 102. The door trim 12 comprises leg parts 14 with certain intervals, which is the structure dissimilar to the first embodiment of the present invention.

That is, the door trim 12 comprises a channel part 13 at the upper part thereof, to which the base part of the inner weather strip 15 is inserted. The door trim 12 comprises leg parts 14 which extend from the lower end of the channel part 13 further to the lower direction thereof like the inner weather strip 15. Each leg part 14 has a rectangular shape in section and supports the support part 19 of the inner weather strip 19 from underneath. Each leg part 14 leans aslant to support the support part 19 sufficiently. Further, each leg 14 is formed for every predetermined interval with a fixed width. Accordingly, the support part 19 of the inner weather strip 15 is exposed to the inside area of the door trim 12 at portions where the leg parts 14 are unprovided.

The upper end of the noise insulation sheet 20 is fixed to the support part 19 of the inner weather strip 15 between the support part 19 and the leg parts 14 where the leg parts 14 are provided. That is, as shown in Fig. 8, the noise insulation sheet 20 passes between the upper end of the door inner panel1 and the inner weather strip 15 covering the leg parts 14, and it is carried at the top portion of the door inner panel 11 and is hung down in the downward direction. Moreover, as shown in a sectional view along line B-B in Fig. 8 (which corresponds to Fig. 2 of the first embodiment), the noise insulation sheet 20 is fixed to the support part 19 where the leg parts 14 are unformed.

Although in this embodiment, the leg parts 14 are formed in the door trim 12 with the intervals between them, the leg parts 14 can be uniformed continuously extending in the longitudinal direction without intervals. Or, the leg parts 14 may not be formed at all.

### (Third embodiment of the invention)

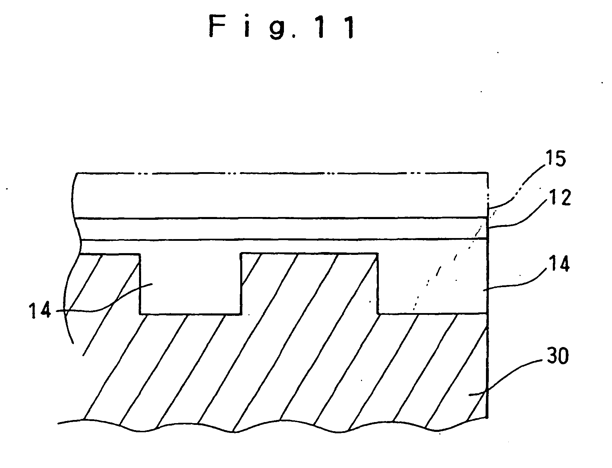

A third embodiment of a car door structure according to the present invention will be described referring to Fig. 10 and 11. In Fig. 10, the inner weather strip 15 is illustrated with a phantom line, and the area the noise insulation sheet 30 locates is illustrated with slash, for convenience.

In comparison with the second embodiment of the invention described above, in this embodiment, a door trim 12 and an inner weather strip 15 are similar in shape, but a means for fixing the upper part of a noise insulation sheet 30 is dissimilar.

That is, as shown in a sectional view along line B-B in Fig. 8 (which corresponds to Fig. 2 of the first embodiment), the upper part of the noise insulation sheet 30 is fixed to the support part 19 where leg parts 14 are unformed, which structure is similar to the noise insulation sheet 20 in the second embodiment. However, unlike the second embodiment of the invention, the upper end of the noise insulation sheet 30 is unfixed to the support part 19 of the door trim 14, where the leg parts 14 are formed and the upper end of the sheet 20 is lowered to the bottom end of the leg parts 14.

According to this embodiment, it is unnecessary to provide the noise insulation sheet 30 to the portions where the leg parts 14 are formed as the upper end of the sheet 30 is lowered to the bottom end of the leg parts 14, so that the noise insulation sheet 30 can be saved in quantity. Further, the support part 19 improves in its adhesion nature against the inner weather strip 15 at portion where the noise insulation sheet 30 is unprovided since no sheet 30 is furnished between the support part 19 and the weather strip 15.

### (Fourth embodiment of the invention)

As shown in Fig. 2 of the first embodiment of the invention, there is a problem that the both sides or the lower part of the noise insulation sheet 20 would protrude out of the door trim 12 when the noise insulation sheet 20 is hung down and fixed at the end portion thereof.

In case, the noise insulation sheet 20 protrudes out of the door trim 12, an outlook of the car door structure will worsen, and the noise insulation effect thereof will also worsen.

Therefore, an object of the fourth embodiment of the present invention is to firmly fix the ends of a noise insulation sheet provided between a door inner panel and a door trim, and to position the noise insulation sheet not to protrude out of the door trim.

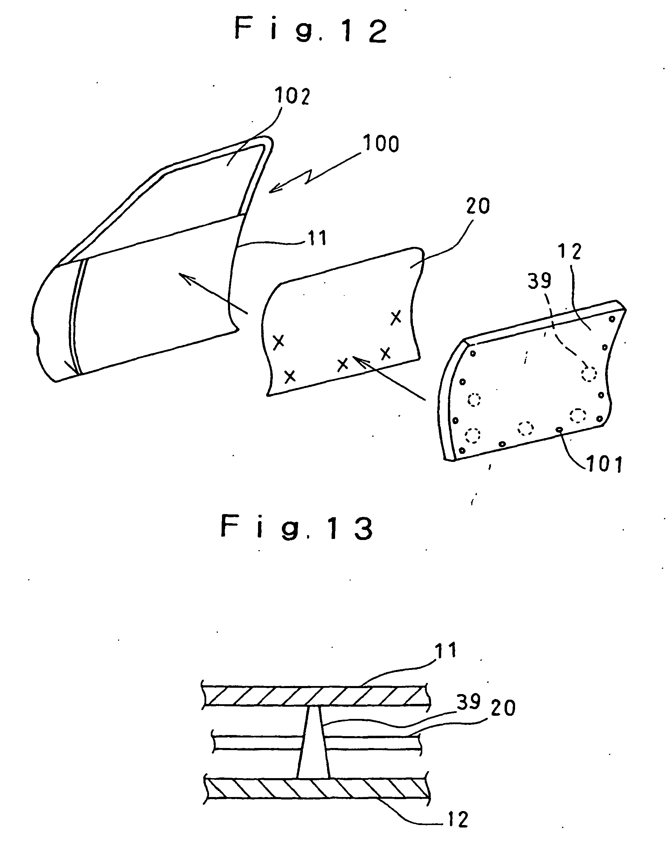

Referring to Fig. 12 and 13, the fourth embodiment of a car door structure according to the present invention will be described. Fig. 12 is a disassembled perspective view showing a car door structure according to the fourth embodiment of the invention. Fig. 13 is an enlarged sectional view showing a primary part of structure shown in Fig. 12. Identical numerals are given to the identical parts described in the first or the prior embodiments, and explanation thereof will be excluded.

The door trim 12 is provided with pins 39 at the left and right sides and the lower side thereof projecting to the side of a door inner panel 11. (Fig. 12 illustrates an embodiment having five pins 39. The pins 39 may be provided to the left and right sides of the door trim 12 only or the lower side only.) The pin 39 is not limited to any form in shape. In this embodiment, the tip of the pin 39 is projected, and the bottom of the pin 39 is fixed to the door trim 12.

And, as shown in Fig. 13, each pin 39 penetrates the noise insulation sheet 20, thereby fixing both left and right sides and the lower part of the noise insulation sheet 20 to the door inner panel 11, and positioning the insulation sheet 20 not to protrude out of the edge of the door trim. In Fig. 12, x marks are provided on the noise insulation sheet, which indicate the points the pins 39 penetrate. The door trim 12 is fixed to the door inner panel 11 with clips 101. Each pin 39 is provided between the clips 101 at the inner side of the clips 101.

In this embodiment, the noise insulation sheet 20 is fixed at both the left and right sides as well as the lower part while it is positioned not to protrude out of the edge of the door trim 12 by penetrating the pins 39 therethrough. The noise insulation sheet 20 can also be positioned as it is pressed to the door inner panel 11 by the pins 39.

### (Fifth embodiment of the invention)

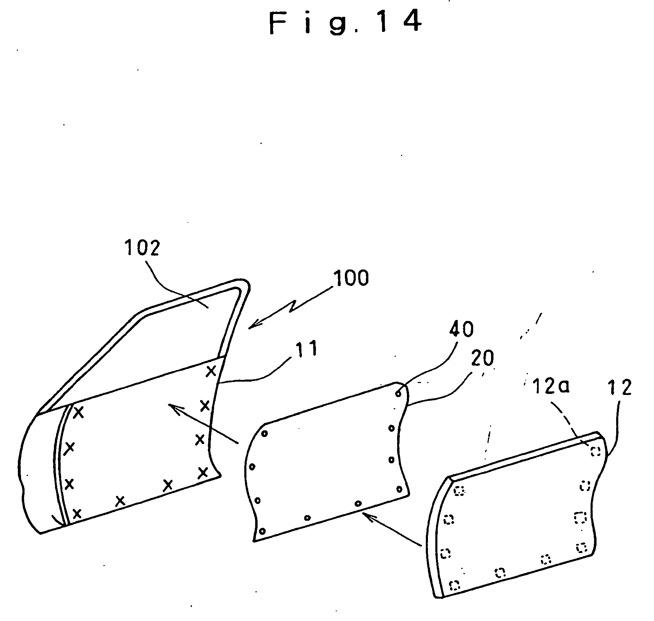

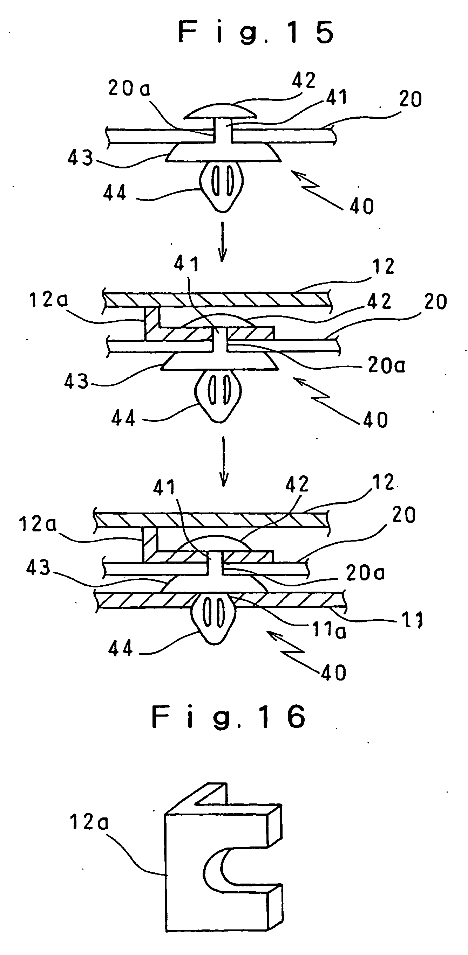

Referring to Fig. 14-16, the fifth embodiment of a car door structure according to the present invention will be described. Fig. 14 is a perspective view showing a car door structure according to the fifth embodiment of the invention. Fig. 15 is an enlarged sectional view showing a primary part of the view shown in Fig. 14. Further, Fig. 16 is a perspective view showing a clip attachment part of a clip shown in Fig. 15.

According to the embodiment of the car door structure, the noise insulation sheet 20 is provided with clips 40 as a fixing means at the side thereof as shown in Fig. 14, instead of comprising the pins 39 as described in the fourth embodiment.

Each clip 40 comprises a head part 42 bulgingly formed above a neck part 41, an umbrella part 43 bulgingly formed below the neck part 41 being formed greater than the head part 42 in size, and a leg part 44 formed below the umbrella part 43.

As shown in Fig. 14 and Fig. 15, the clips 40 are attached to the noise insulation sheet 20 at both the left and right sides and the lower part thereof as well as each clip 40 is inserted into a hole 20a formed in the sheet 20. (It is effective even if the clips 40 are attached only to the left and right sides or the lower part of the sheet 20.) Further, the noise insulation sheet 20 is fixed to the door trim 12 by engaging the neck part 41 of the clip 40 with an U-shaped engaging hole of a clip attachment part 12a fixed to the door trim 12. And, the noise insulation sheet 20 is fixed to the door inner panel 11 by inserting the leg part 44 of the clip 40 into the hole 11a formed in the door inner panel 11.

Accordingly, the noise insulation sheet 20 can be accurately positioned as such that the both left and right sides and the lower part of the sheet 20 does not protrude out of the edge of the door trim 12. In Fig. 14, x marks are illustrated to indicate points the leg parts 44 of the clips 40 are to be inserted.

As the door trim 12 is fixed to the door inner panel 11 with the clips 40, the clips 101 illustrated in Fig. 12 are unneeded to apply. Moreover, both the clips 40 and the clips 101 can be applied together.

### (Sixth embodiment of the invention)

An object of the sixth embodiment of the present invention is, similar to the fourth embodiment, to firmly fix the edge portion of a noise insulation sheet, which is hung down between the door inner panel and the door trim, and position the sheet not to protrude out of the door trim.

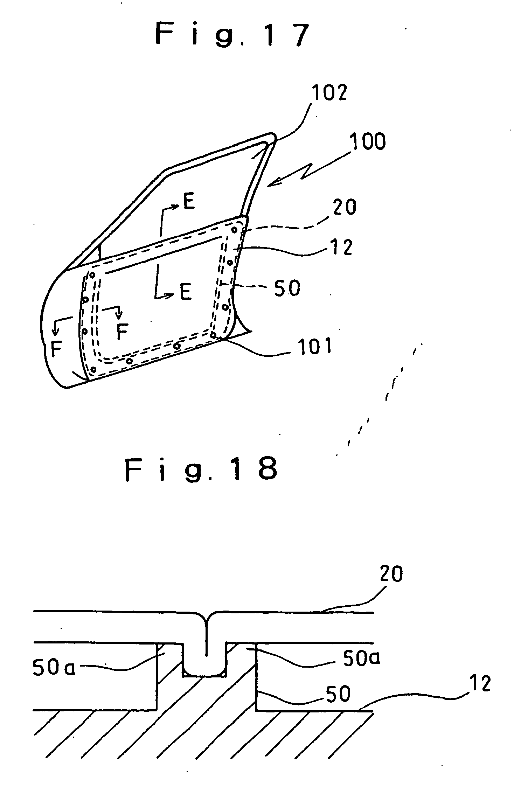

Referring to Fig. 17, 18 and 19, the sixth embodiment of a car door structure according to the present invention will be described.

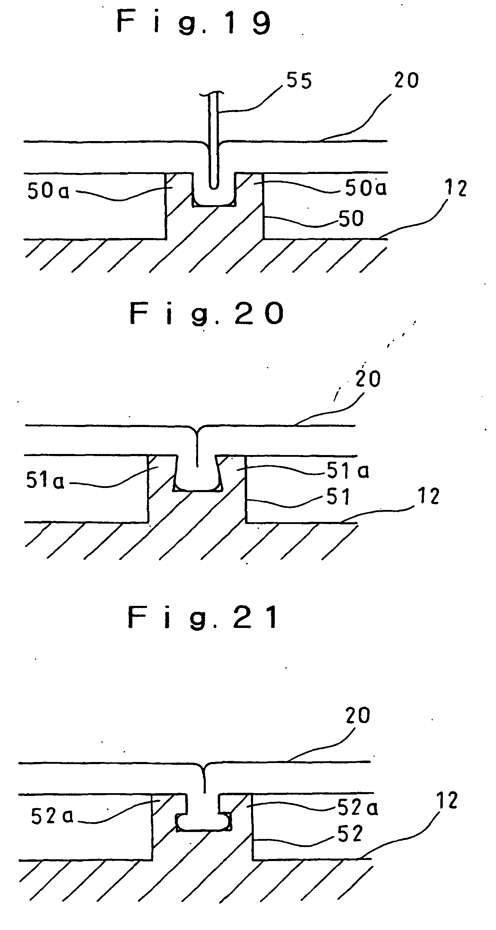

Fig. 17 is a perspective view showing a car door structure according to the sixth embodiment of the invention. Fig. 18 is an enlarged sectional view along line F-F in Fig. 17. Fig. 19 is a sectional view showing a condition where a noise insulation sheet is fixed to a groove as it is forced into the groove. An enlarged sectional view along line E-E in Fig. 17 corresponds to the view shown in Fig. 2 of the first operation form.

Identical numerals are given to the identical parts described in the first embodiment, and explanation thereof will be excluded.

According to this embodiment, as shown in Fig. 18, a groove 50 having a channel shape in section is uniformed with the door trim 12 at the periphery of the door trim 12 at the side of the inner panel 11, which runs, in this embodiment, along the left and right sides and the lower part of the door trim 12. Although the channel 50 is continuously formed in this embodiment, it may be formed intermittently.

The end portion of the noise insulation sheet 20 is fixed to the groove 50 as it is pushed into the groove 50, so that the edge portion of the noise insulation sheet 20 is secured not to protrude out of the door trim 12.

As shown in Fig. 19, the end portion of the noise insulation sheet 20 is folded into two parts and is pushed into the channel 50 using a stick or board-shaped jig having or not having a roller at the top thereof. The end portion of the noise insulation sheet is pushed into the groove 50 and is firmly fixed as it is clamped by the left wall 50a and the right wall 50a of the groove 50.

Although, the door trim 12 is fixed to the door inner panel 11 with clips 101, the end portion of the noise insulation sheet 20 can be fixed with the clips 101 as well.

The shape of the channel 50 is not limited to the one shown in Fig. 18, and it may have any shape as far as it is able to clamp and fix the end portion of the noise insulation sheet 20.

For example, as shown in Fig. 20, the groove 51 may be formed such that both the left side and the right side walls 51a, 51a are formed thicker in the inner side toward the top end thereof, while the inner surfaces thereof are tapered to widen toward the bottom end. Further, as shown in Fig. 21, the groove 52 may be formed such that the top end of the left side and the right side walls 52a, 52a are bent inside, thereby forming the top end of the walls 52a like a hook, and making the groove comprising a wider space portion and a narrower space portion.

The structures shown in Figs. 20 and 21 are superior than the structure shown in Fig. 18 in firmly fixing the end portion of the noise insulation sheet 20. However, the latter is better than the former in removing the molded part from the mold, which comprises the groove 50 uniformed with the door trim.

### (Seventh embodiment of the invention)

There is another problem to be solved. As shown in Fig. 2 of the first embodiment, even though the noise insulation sheet 20 is provided between the door inner panel 11 and the door trim 12, the outcome of the noise insulation effect of the sheet occasionally reduced as a noise invades or leaks through the lower part of a door structure between the lower part of the door trim 12 and the inner panel 11.

There was a prior art which was able to increase a noise insulation effect by attaching a noise absorbing material to a crevice formed at the lower part of the door. However, such conventional art required much time and effort for an installation operation of the material, and an outlook of the door structure was poor since, as described previously, the material was formed separate from the door parts and attached to the door partially.

Therefore, an object of the seventh embodiment of the present invention is to further increase the noise insulation effect by lessening a noise invading and leaking through a crevice formed between the lower part of the door trim and the door inner panel, using a noise insulation sheet.

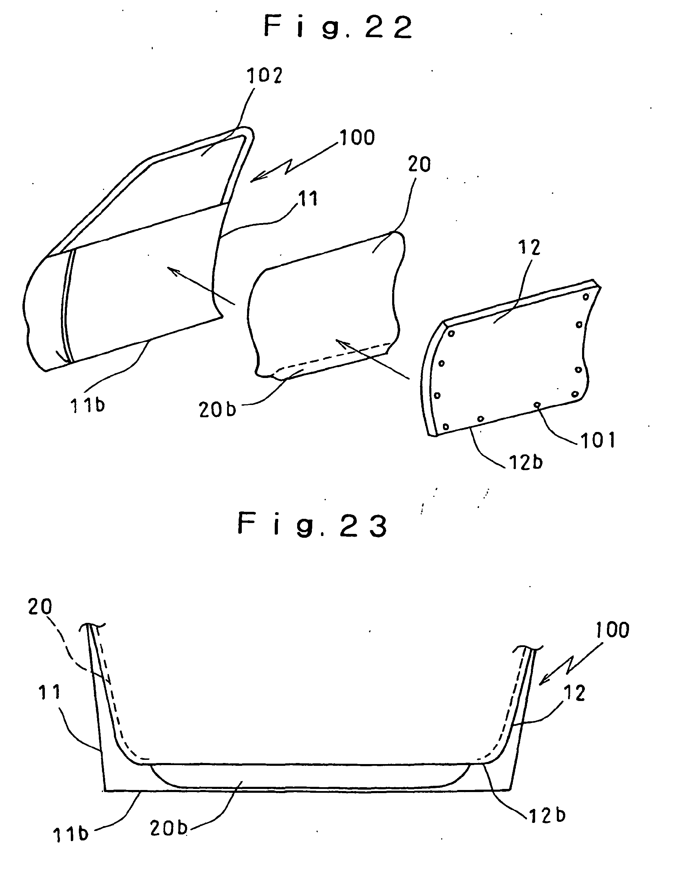

Referring to Fig. 22 and 23, an embodiment of a noise insulation sheet according to the present invention will be described. Fig. 22 is a decomposition perspective view showing a door in which a noise insulation sheet according to an embodiment of the present invention is attached. Fig. 23 is an enlarged side view showing a part of the noise insulation sheet according to an embodiment of the invention. Identical numerals are given to the identical parts described in the first or previous embodiments, and explanation thereof will be excluded.

A noise insulation sheet 20 according to an embodiment of the present invention is provided as it is hung down like a curtain between a door inner panel 11 and a door trim 12 of a car door structure. At the interior side of the door inner panel 11, the door trim 12 for interiors is attached where the lower end 12b of the door trim 12 positions above the lower end 11b of the door inner panel 11.

The upper end of the noise insulation sheet 20 is attached to the door inner panel 11 or the door trim 12. The door trim 12 is fixed to the door inner panel 11 with clips 101. As shown in Fig. 2, the upper part of the noise insulation sheet 20 may be attached to an inner weather strip 15 secured to the door trim 12 (or, it may be fixed to the door inner panel 11). Furthermore, it is effective to make a slit in the noise insulation sheet 20 in order to install the harness such as a door handle, power windows and a lock to a door panel at the time of an installation operation, which makes easy to uninstall those parts as well.

The noise insulation sheet 20 is made of a cloth having a concave shape, which fully covers the door trim 12. The noise insulation sheet 20 is installed as such that the lower end 20b thereof protrudes in a downward direction from the lower end 12b of the door trim 12. And as shown in Fig. 23, the lower end 20b of the noise insulation sheet 20 protruded from the lower end 12b of the door trim 12 is attached to the interior side of the door inner panel 11 by such as a tape and clips.

As described above, by protruding the lower part 20b of the noise insulation sheet 20 from the lower end 12b of the door trim 12, it can mitigate the invasion and leakage of the noise through a gap formed at the lower part of the door 100 between the lower part of the door trim 12 and the door inner panel 11, so that the noise isolation effect further improves.

### Effects of the invention:

According to the invention, a new space room is provided between the door inner panel and the door trim as the noise insulation sheet is hung down between the door inner panel and the door trim like a curtain. With this newly provided room, the noise insulation effect improves compared to the conventional arts which are provided with felt, urethane, pad material, the noise insulation cover, and the like.

Further, the noise insulation sheet can be easily installed since it is merely hung down from the upper side to the lower side like a curtain.

Particularly, according to the invention, the noise insulation sheet covers at least the upper part of the door inner panel, so that a leakage of the noise through the upper portion of the door inner panel can be mitigated.

Further, it becomes possible to reduce a material cost of the noise insulation sheet, and it becomes easy to install the noise insulation sheet by providing the noise insulation sheet approximately to an upper half or lower half of the entire door inner panel, or by providing the sheet in the mid portion of the door inner panel while the entire door inner panel is equally divided approximately into three sections in a vertical or a horizontal direction thus making the noise insulation sheet smaller in size.

Particularly, according to a further aspect of the invention, the installation operation becomes easier because an installation operation is completed by attaching the inner weather strip, to which the noise insulation sheet is attached in advance, to the door trim,

According to a further aspect of the invention, the noise insulation sheet can be firmly fixed since the upper end of thereof is fixed between the leg parts of the door trim, which supports some portions of the inner weather strip from underneath, and a part of the inner weather strip.

According to a further aspect of the invention, the noise insulation sheet is unused at the leg parts where the upper end of the sheet is lowered, so that the noise insulation sheet is saved in quantity for an amount the sheet is lowered, and that the noise insulation sheet can be saved in quantiy and efficiently used. Further, the noise insulation sheet is unprovided between the leg parts and the support part of the inner weather strip, so that an adhesion nature of the support part against the leg parts increases.

According to a further aspect of the invention, the noise insulation sheet does not protrude out of the edge of the door trim, and the noise insulation effect does not decrease nor the outlook of the door decreases since the noise insulation sheet is hung down between the door inner panel and the door trim like a curtain, while the both sides or the lower part of the noise insulation sheet is adequately positioned by the pins or clips.

Particularly, according to further aspects of the invention, the edge portion of the noise insulation sheet is sufficiently prevented from protruding out to the door trim because the clips are provided at both sides or the lower portion of the noise insulation sheet.

According to further aspects of the invention, an outlook of the car door structure does not decrease nor the noise insulation effect decrease since the edge part of the noise insulation sheet, which is hung down like a curtain between the door inner panel and the door trim, is pushed into the groove having a concave shape in section and is fixed not to protrude out of the edge of the door trim.

According to further aspects of the invention, the noise insulation effect improves since two rooms are created between the door inner panel and the door trim by an installation of the noise insulation sheet between the door inner panel and the door trim.

Further, it is unnecessary to transport the door trim with the door inner weather strip secured to the door trim to an installation field because the door inner weather strip is secured to the door inner panel and it is not secured to the door trim.

That is, the inner weather strip alone or the inner weather strip which the noise insulation sheet secured to the inner weather strip can be transported to the installation field separated from the door trim or the door inner panel, so that those parts can be transported to the installation field in a smaller size, and that a transportation operation becomes easier.

Furthermore, a removing operation of the harness becomes easier during an installation operation since operators are able to reach their hands to the harness of the door from any side area of the door. And, the installation operation can be pursued efficiently because the door installation operation can be completed by checking the harness with operators' eyes.

Further, the installation operation can be performed easily since the noise insulation sheet can be fixed merely by inserting the upper end of the sheet to the inner weather strip. And, the noise insulation sheet can be firmly fixed to the inner weather strip because a plurality of projection pieces of the attachment mechanism tightly stick to and hold the upper end of the noise insulation sheet both from the outer and interior sides of the car when the installation operation is completed.

Furthermore, the noise insulation sheet is prevented from shifting its position and an outlook of the door structure can be properly maintained since the door trim is provided with pressing pieces at the door inner panel side, which press the noise insulation sheet to the door inner panel when the sheet is installed.

Further, an invasion of water invaded in the door inner panel can be prevented from further invading in the interior side of the door trim by pressing the noise insulation sheet around holes provided to the door inner panel with pins projected from the door trim which force the noise insulation sheet to the door inner panel. In this case, at least the external surface (which is by the side of the door inner panel) of the noise insulation sheet should be formed with a material having a small water absorptivity.

According to a further aspect of the invention, fewer noise invades or leaks through a gap formed at the lower part of the door between the lower part of the door trim and the door inner panel, and the noise isolation effect furter increases because the lower part of the noise insulation sheet, which is hung down like a curtain between the door inner panel and the door trim, protrudes from the bottom edge of the door trim, and the protruded part of the sheet is fixed to the interior side of the door inner panel.

Further, much less time is required in an installation operation, and a better outlook of the door structure can be obtained since the protruded part of the noise insulation sheet, extending from the lower end of the noise insulation sheet, is applied to the lower part of the door structure, instead of applying an individual part which is prepared separate from the noise insulation sheet.

The features disclosed in the foregoing description, in the claims and/or in the accompanying drawings may, both separately and in any combination thereof, be material for realising the invention in diverse forms thereof.

## Claims

1. A car door structure comprising a door inner panel (11), an interior door trim (12, 22, 32) a noise insulation sheet (20, 30), a weather strip (15, 25, 35) and a door glass (102) wherein said door trim (12, 22, 32) is provided over the door inner panel (11) to the interior side of the door inner panel (11); said inner weather strip (15, 25, 35) comprises at least one seal lip (17, 18, 27, 28, 37) for making resilient contracts with the door glass (102); said weather strip (15, 25, 35) is provided at the upper part of the door trim (12, 22, 32); said noise insulation sheet (20, 30) is hung down in a space between the door inner panel (11) and the door trim (12, 22, 32) like a curtain so as to divide said space into two spaces (90, 95) by means of the noise insulation sheet (20, 30); and said noise insulation sheet (20, 30) covers at least the upper edge of the door panel (11).

2. A car door structure claimed in claim 1, wherein the upper end of the noise insulation sheet (20) is fixed to the inner weather strip (15, 25, 35).

3. A car door structure claimed in claim 1, wherein the upper end of the noise insulation sheet (20, 30) is fixed to the door trim (12, 22) or the door inner panel (11).

4. A car door structure claimed in claim 1, wherein the door trim (12) comprises a channel part (13) at the upper part thereof; said channel part (13) receives an attachment base (16) of the inner weather strip (15); said channel part (13) has a concave shape in section; said channel part (13) is provided with leg parts (14) at the lower end thereof extending in a downward direction; said leg parts (14) support partially the inner weather strip (15) from underneath; and said noise insulation sheet (20) is fixed between the leg parts (14) and some portions of the inner weather strip (15) corresponding to the leg parts (14).

5. A car door structure claimed in claim 1, wherein the door trim (12) comprises a channel part (13) at the upper part thereof; said channel part (13) receives an attachment base (16) of the inner weather strip (15); said channel part (13) has a concave shape in section; said channel part (13) is provided with leg parts (14) at the lower part thereof with certain intervals ; said leg parts (14) extend in a downward direction; said leg parts (14) receive some portions of the inner weather strip (15); the upper part of the noise insulation sheet (30) is fixed to some portions of the inner weather strip (15) where the leg parts (14) are unprovided and the inner weather strip (15) is exposed; and said noise insulation sheet (30) is unfixed at portions where the leg parts (14) are provided as the upper end of the sheet (30) is lowered.

## Patentansprüche

1. Autotürstruktur mit einem Türinnenblech (11), einer inneren Türverkleidung (12, 22, 32), einer Geräuschdämmmatte (20, 30), einem Dichtungsstreifen (15, 25, 35) und einem Türglas (102), worin die Türverkleidung (12, 22, 32) über dem Türinnenblech (11) zur Innenseite des Türinnenblechs (11) vorgesehen ist, der innere Dichtungsstreifen (15, 25, 35) mindestens eine Dichtlippe (17, 18, 27, 28, 37) zur Schaffung von elastischen Kontakten mit dem Türglas (102) aufweist, der Dichtungsstreifen (15, 25, 35) an dem oberen Teil der Türverkleidung (12, 22, 32) vorgesehen ist, die Geräuschdämmmatte (20, 30) in einen Raum zwischen dem Türinnenblech (11) und der Türverkleidung (12, 22, 32) wie ein Vorhang herunterhängt, um den Raum in zwei Räume (90, 95) mittels der Geräuschdämmmatte (20, 30) zu unterteilen, und die Geräuschdämmmatte (20, 30) mindestens die Oberkante des Türinnenblechs (11) bedeckt.

2. Autotürstruktur nach Anspruch 1, **dadurch gekennzeichnet, daß** das obere Ende der Geräuschdämmmatte (20) an dem inneren Dichtungsstreifen (15, 25, 35) befestigt ist.

3. Autotürstruktur nach Anspruch 1, **dadurch gekennzeichnet, daß** das obere Ende der Geräuschdämmmatte (20, 30) an der Türverkleidung (12, 22) oder dem Türinnenblech (11) befestigt ist.

4. Autotürstruktur nach Anspruch 1, **dadurch gekennzeichnet, daß** die Türverkleidung (12) ein Kanalteil (13) an derem oberen Teil aufweist, das Kanalteil (13) eine Befestigungsbasis (16) des inneren Dichtungsstreifens (15) aufnimmt, das Kanalteil (13) im Querschnitt eine konkave Gestalt aufweist, das Kanalteil (13) mit Schenkelteilen (14) an dessen unterem Ende versehen ist, die in einer Abwärtsrichtung verlaufen, die Schenkelteile (14) den inneren Dichtungsstreifen (15) von unten teilweise stützen und die Geräuschdämmmatte (20) zwischen den Schenkelteilen (14) und gewissen Abschnitten des inneren Dichtungsstreifens (15), die den Schenkelteilen (14) entsprechen, befestigt ist.

5. Autotürstruktur nach Anspruch 1, **dadurch gekennzeichnet, daß** die Türverkleidung (12) ein Kanalteil (13) an derem oberen Teil aufweist, das Kanalteil (13) eine Befestigungsbasis (16) des inneren Dichtungsstreifens (15) aufnimmt, das Kanalteil (13) im Querschnitt eine konkave Gestalt aufweist, das Kanalteil (13) mit Schenkelteilen (14) an dessem unteren Teil in bestimmten Abständen versehen ist, die Schenkelteile (14) in einer Abwärtsrichtung verlaufen, die Schenkelteile (14) gewisse Abschnitte des inneren Dichtungsstreifens (15) aufnehmen, das obere Teil der Geräuschdämmmatte (30) an gewissen Abschnitten des inneren Dichtungsstreifens (15) befestigt ist, wo die Schenkelteile (14) nicht vorgesehen sind und der innere Dichtungsstreifen (15) freiliegt, und die Geräuschdämmmatte (30) an Abschnitten nicht befestigt ist, wo die Schenkelteile (14) vorgesehen sind, da das obere Ende der Matte (30) abgesenkt ist.

## Revendications

1. Structure de porte de véhicule comportant un panneau intérieur de porte (11), un garnissage intérieur de porte (12, 22, 32), une couche d'isolation acoustique (20, 30), un bourrelet d'étanchéité (15, 25, 35) et une vitre de porte (102), dans laquelle ledit garnissage de porte (12, 22, 32) est mis en oeuvre sur le panneau intérieur de porte (11) sur le côté intérieur du panneau intérieur de porte (11) ; dans laquelle ledit bourrelet d'étanchéité intérieur (15, 25, 35) comporte au moins une lèvre d'étanchéité (17, 18, 27, 28, 37) pour réaliser des contacts élastiques avec la vitre de porte (102) ; dans laquelle ledit bourrelet d'étanchéité (15, 25, 35) est mis en oeuvre au niveau de la partie supérieure du garnissage de porte (12, 22, 32) ; dans laquelle ladite couche d'isolation acoustique (20, 30) est suspendue dans un espace entre le panneau intérieur de porte (11) et le garnissage de porte (12, 22, 32) tout comme un rideau afin de diviser ledit espace en deux espaces (90, 95) par le biais de la couche d'isolation acoustique (20, 30) ; et dans laquelle ladite couche d'isolation acoustique (20, 30) recouvre au moins le bord supérieur du panneau de porte (11).

2. Structure de porte de véhicule selon la revendication 1, dans laquelle l'extrémité supérieure de la couche d'isolation acoustique (20) est fixée sur le bourrelet d'étanchéité intérieur (15, 25, 35).

3. Structure de porte de véhicule selon la revendication 1, dans laquelle l'extrémité supérieure de la couche d'isolation acoustique (20, 30) est fixée sur le garnissage de porte (12, 22) ou sur le panneau intérieur de porte (11).

4. Structure de porte de véhicule selon la revendication 1, dans laquelle le garnissage de porte (12) comporte une pièce de type profilé en U (13) au niveau de la partie supérieure de celui-ci ; dans laquelle ladite pièce de type profilé en U (13) reçoit une base de fixation (16) du bourrelet d'étanchéité intérieur (15); dans laquelle ladite pièce de type profilé en U (13) présente une forme concave en coupe ; dans laquelle ladite pièce de type profilé en U (13) est mise en oeuvre avec des pièces de type montant (14) au niveau de l'extrémité inférieure de celle-ci se prolongeant dans une direction qui va vers le bas ; dans laquelle lesdites pièces de type montant (14) supportent partiellement le bourrelet d'étanchéité intérieur (15) par en dessous ; et dans laquelle ladite couche d'isolation acoustique (20) est fixée entre les pièces de type montant (14) et certaines portions du bourrelet d'étanchéité intérieur (15) correspondant aux pièces de type montant (14).

5. Structure de porte de véhicule selon la revendication 1, dans laquelle le garnissage de porte (12) comporte une pièce de type profilé en U (13) au niveau de la partie supérieure de celui-ci ; dans laquelle ladite pièce de type profilé en U (13) reçoit une base de fixation (16) du bourrelet d'étanchéité intérieur (15) ; dans laquelle ladite pièce de type profilé en U (13) présente une forme concave en coupe ; dans laquelle ladite pièce de type profilé en U (13) est mise en oeuvre avec des pièces de type montant (14) au niveau de la partie inférieure de celle-ci selon certains intervalles ; dans laquelle lesdites pièces de type montant (14) se prolongent dans une direction qui va vers le bas ; dans laquelle lesdites pièces de type montant (14) reçoivent certaines portions du bourrelet d'étanchéité intérieur (15) ; dans laquelle la partie supérieure de la couche d'isolation acoustique (30) est fixée sur certaines portions du bourrelet d'étanchéité intérieur (15) où les pièces de type montant (14) ne sont pas mises en oeuvre et où le bourrelet d'étanchéité intérieur (15) est exposé ; et dans laquelle ladite couche d'isolation acoustique (30) n'est pas fixée au niveau des portions où les pièces de type montant (14) sont mises en oeuvre quand l'extrémité supérieure de la couche (30) est abaissée.
